# EUROPEAN PATENT APPLICATION

(11) **EP 4 693 217 A1**
(43) Date of publication of application: **11.02.2026**
(21) Application number: 24193342.3
(22) Date of filing: 07.08.2024
(51) Int. Cl.: G06V 10/762, G06V 10/764, G06V 10/82, G06V 20/64, G06V 20/70, G06V 10/62, G06V 10/80

(54) **PROCESSING IMAGES OF AN ENVIRONMENT**

(71) Applicant: Shell Internationale Research Maatschappij B.V., 2596 HR The Hague (NL)
(72) Inventor: BLOM, David Stephen, 1031 HW Amsterdam (NL); THOLEN, Haye-Jan, 2501 The Hague (NL); SAMIE, Farid, Houston, TX 77079 (US); IRRGANG, Stefan, Ras Laffan 3747 (QA); WIJMA, Ruth Lieuwe, 1031 HW Amsterdam (NL)
(74) Representative: Shell Legal Services IP

(57) **Abstract**

A method for processing images of an environment in a first image database from a first time and a second image database from a second time to identify images in each database depicting the same anomalous part of an environment. Image databases and point clouds depicting the environment are accessed along with camera pose information. A first plurality of anomalous image portions are obtained from the first image database and a second plurality of anomalous image portions from the second image database using machine vision. For each anomalous image portion, a 3-dimensional location in the environment, classification and image embedding are obtained. Image portions in the first plurality of image portions and second plurality of image portions are clustered into a first plurality of clusters and second plurality of clusters respectively based on 3D location, classification and embedding. Each cluster corresponds to an anomalous part of the environment. It is determined whether a first cluster from the first plurality of clusters corresponds to the same part of the environment as a second cluster from the second plurality of clusters based on 3D location, classification and embedding of the image portions in the first and second clusters.

## Description

### TECHNICAL FIELD

The present invention relates to image processing.

### BACKGROUND

Image data of an environment are routinely obtained to monitor the status of the environment and detect issues or anomalies. For example, the environment may include equipment susceptible to damage or degradation over time. Images are obtained for example with handheld devices, drones or robots.

The embodiments described below are provided by way of example only and are not limiting of implementations which solve any or all of the disadvantages of known image processing methods.

### SUMMARY

This summary is provided to present a selection of concepts disclosed herein in a simplified form, which are described in more detail below. This summary is not intended to identify key features or essential features of the claimed subject matter nor is it intended to be used to limit the scope of the claimed subject matter.

Disclosed herein is a method for processing images of an environment in a first image database and a second image database, wherein the first image database is from a first time and the second image database is from a second time, to identify images in each database depicting the same anomalous part of an environment. The method comprises accessing a first image database and a second image database and accessing a first point cloud depicting the environment from the first time and a second point cloud depicting the environment from the second time. A point cloud is a discrete set of data points which each have a position in three-dimensional (3D) space. The first point cloud and second point cloud provide 3D information about the environment at the first and second times respectively. Camera pose information is also obtained for each image in each image database. The method comprises obtaining a first plurality of anomalous image portions from the first image database and a second plurality of anomalous image portions from the second image database using machine vision. The method also comprises, for each image portion in the first plurality of anomalous image portions and for each image portion in the second plurality of anomalous image portions, determining a 3-dimensional location in the environment for the image portion based on the first point cloud and the camera pose information, classifying the image portion into one of a plurality of classes, and computing an image embedding for the image portion. Image portions in the first plurality of image portions are clustered into a first plurality of clusters based on 3D location, classification and embedding. Each cluster corresponds to an anomalous part of the environment. Image portions in the second plurality of image portions are clustered into a second plurality of clusters based on 3D location, classification and embedding. Each cluster corresponds to an anomalous part of the environment. Clustering based on location, classification and embedding results in clusters where all the image portions in the cluster correspond to the same anomalous portion of the environment. The method then determines whether a first cluster from the first plurality of clusters corresponds to the same part of the environment as a second cluster from the second plurality of clusters based on 3D location, classification and embedding of the image portions in the first and second clusters.

The method results in improved image processing because it allows images from different times which represent the same part of an environment to be compared to each other. Clustering based on 3D location, classification and embedding is an efficient way to identify images representing the same anomaly thus saving processing time. Also, location, classification, and embedding provide ways by which to accurately determine whether a first cluster corresponds to a second cluster. Providing improved methods for monitoring an environment over time means that the environment can be managed accordingly, improving safety and efficiency in the environment.

Various examples disclosed herein further comprise determining whether corrosion under insulation CUI is present in the anomalous part of the environment or in another anomalous part of the environment at the first time. This is done by obtaining a plurality of candidate locations for CUI from the 3D locations of anomalous image portions in the first plurality of anomalous image portions. It is then determined whether CUI is present at each candidate location based on information associated with the candidate location. The information comprises one or more candidate image portions associated with the candidate location, measured environmental variables related to the candidate location, and information relating to historical CUI at the candidate location extracted from a document database comprising documents related to the environment. Information relating to historical CUI may be extracted using natural language processing. Image processing is improved because CUI may be accurately identified in an image database using a combination of image predictions with real time operation conditions and historical reports. Information relating to historical CUI, environmental variables, and image portions are suitable data which provide accurate identification of CUI. Natural language processing is an accurate and efficient means by which to extract information relating to historical CUI which is a good predictor of CUI at a later time. Environmental variables such as pressure, temperature and humidity also provide useful information which contributes to accurate CUI prediction. Further examples additionally or alternatively comprise determining whether CUI is present in an anomalous part of the environment at the second time using method described.

In some scenarios, methods further comprise representing the anomalous part of the environment at the first time as a first anomalous point cloud. This is done by using a segmentation model to generate a segmentation map from one or more images in the first image database which include the anomalous part of the environment. A point cloud segmentation is generated from each segmentation map using the first point cloud depicting the environment. If more than one point cloud segmentation is generated, point cloud segmentations are combined together.

Representing the anomalous part of the environment as a first anomalous point cloud improves image processing because it allows an anomaly to be represented as a three-dimensional point cloud. Using a segmentation model to generate a segmentation map means that pixels corresponding to the anomalous part of the environment can be accurately identified. Combining point cloud segmentations from one or more images to obtain a first anomalous point cloud means that the anomalous part of the environment is more accurately represented by the anomalous point cloud. In various examples, methods further comprise representing the anomalous part of the environment at the second time as a second anomalous point cloud in the same was the first anomalous point cloud.

In various scenarios, combining point cloud segmentations from multiple images comprises using a weighted voting strategy. For example, weights depend on camera distance to the part of the environment. Using a weighted voting strategy results in a more accurate representation as an anomalous point cloud because more weight is given to point cloud segmentations which more accurately represent the part of the environment for example because of a smaller camera distance.

Some example methods comprise using the first anomalous point cloud to generate a first surface mesh for the anomalous part of the environment. Generating a surface mesh provides a useful 3D representation of the anomalous part of the environment and so improves image processing. In various examples a second surface mesh is also generated.

Sometimes a first surface area is determined from the first surface mesh. Sometimes a second surface area is determined from the second surface mesh. Determining a surface area from images of an anomalous part of the environment means that a single value (surface area) maybe used to represent the anomaly and its qualities, making further processing more efficient. The first surface area may be compared with the second surface area.

In some scenarios the first surface area and second surface area are used to predict a third surface area at a third time. This means that change to an environment can be predicted and the environment can be managed accordingly in order to improve the safety and efficiency of the environment.

Various example methods include using a machine learning model to compute the image embeddings. A machine learning model provides an accurate and efficient way to compute image embeddings. In some examples the machine learning model is trained using cosine similarity loss in order to result in a trained machine learning model to compute suitable embeddings. Training with cosine similarity loss means that accurate image embeddings are obtained.

### DESCRIPTION OF THE DRAWINGS

The present description will be better understood from the following detailed description read in light of the accompanying drawings, wherein:
FIG. 1 is a schematic diagram showing image processing of images from a first image database and a second image database;
FIG. 2 is a schematic diagram showing image processing of images in a first image database and a second image database;
FIG. 3 is a schematic diagram showing determination of three-dimensional location corresponding to an anomalous image portion;
FIG. 4 is a schematic diagram showing examples of training a machine learning model used to compute image embeddings;
FIG. 5 is a schematic diagram of a machine vision pipeline;
FIG. 6 is a schematic diagram showing generation of a point cloud and surface mesh representing an anomalous portion of the environment;
FIG. 7 is a schematic diagram showing an example method for detecting corrosion under insulation at a candidate 3D location;
FIG. 8 is a flow diagram of a method for processing images of an environment in a first image database and a second image database;
FIG. 9 is a flow diagram of a method for determining whether corrosion under insulation is present in an environment; and
FIG. 10 illustrates an example computing-based device in which image processing methods are implemented.

### DETAILED DESCRIPTION

The following description is presented in connection with the appended drawings and is intended as a description of the present examples to enable a person skilled in the art to make and use the invention. The description is not intended to represent the only forms in which the present examples are constructed or utilized. The present invention is not limited to the embodiments described herein and various modifications to the disclosed embodiments will be apparent to those skilled in the art.

Image data of an environment are routinely obtained to monitor the status of the environment and detect issues or anomalies. For example, the environment may include equipment susceptible to damage or degradation over time. Cracks, corrosion, vegetation, missing studs and/or bolts, ice, or deterioration of materials may occur on equipment in the environment. Images are obtained for example with handheld devices, drones or robots which navigate the environment. A drone may fly around the environment, taking images. Alternatively, a person may navigate the environment with a handheld device or a robot may navigate the environment taking images. The images may be visible light images, infra-red images, images from optimal gas imaging (OGI) combined with RGB (red green blue) cameras, or any other suitable type of image. Comparing images from a first image database obtained at a first time to images from an image database obtained at a second time allows changes in the environment to be monitored. Improvements in ways to monitor the environment over time lead to safer and more efficient management of the environment. Once an integrity issue is found, it may be repaired in order to improve the safety and efficiency of the environment and to improve the performance of equipment within the environment. In some scenarios, the issue may need to be repaired within a certain time span for example in the order of months or years. The time between the first time and the second time in some examples is days, months or years for example 1 day, 6 months or 6 years. Some integrity issues may develop between the first time and the second time, while others may worsen or improve. For example, where there is little or no intervention the integrity issue is likely to worsen. In other examples, such as where the issue is required to be fixed within a time before the next inspection, the issue may improve. The present technology relates to processing images in a first image database and a second image database, wherein the databases are obtained at different times.

A particular type of anomaly which can develop in an environment is corrosion under insulation (CUI). CUI may occur on an insulated pipe or other equipment such as a storage tank. This is where corrosion occurs underneath an insulation layer making the corrosion difficult to detect in images of the equipment since the insulation layer is visible but not the corrosion under the insulation layer. Various examples disclosed herein relate to the detection of corrosion under insulation in images of an environment.

Monitoring the status of an environment and the equipment therein includes detecting anomalous parts of the environment in images depicting the environment in an image database. Also, a point cloud corresponding to the environment at the time when the images were captured provides three-dimensional information about the environment and allows for three-dimensional locations of one or more portions of an image to be determined. A point cloud is a discrete set of data points which each have a position in three-dimensional (3D) space. It represents objects in the environment and is produced for example using photogrammetry or using 3D scanners such as laser scanners. Photogrammetry involves using multiple overlapping images from different positions and angles to produce the point cloud. In various scenarios, a point cloud is produced using photogrammetry by first finding common features in images, then estimating the relative camera poses and projecting the image pixels to 3D space. Data collected using a 3D scanner such as a laser scanner can also be used to produce the point cloud. Reflections of the laser from the surface of objects are used to determine distance of objects from the scanner and generate points in the point cloud. In some cases a point cloud is captured using a depth camera. In further cases point clouds are produced using Gaussian Splatting, or Trilinear Point Splatting (TRIPS). These methods only use images to create a point cloud reconstruction of the environment.

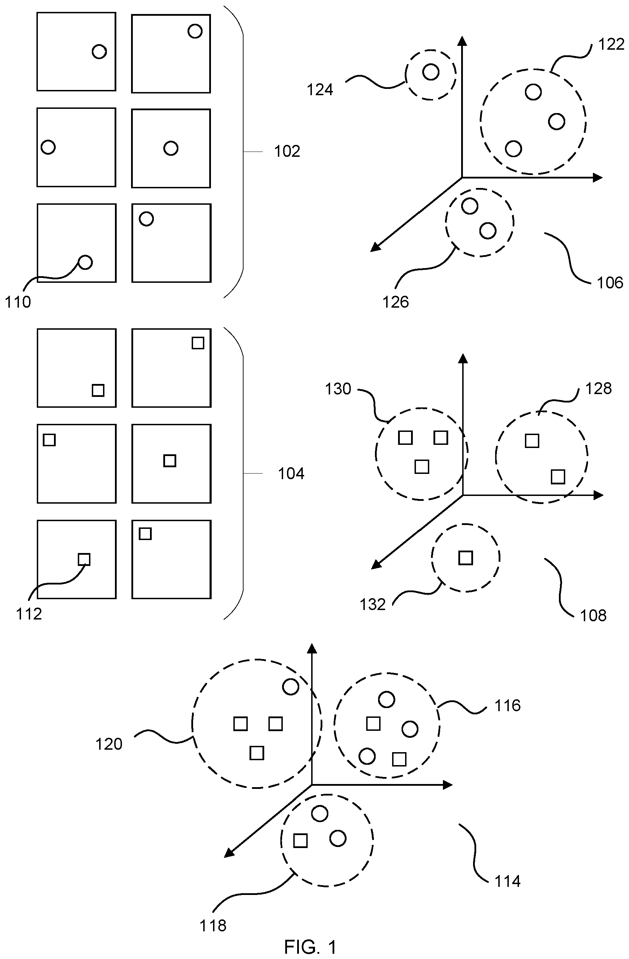

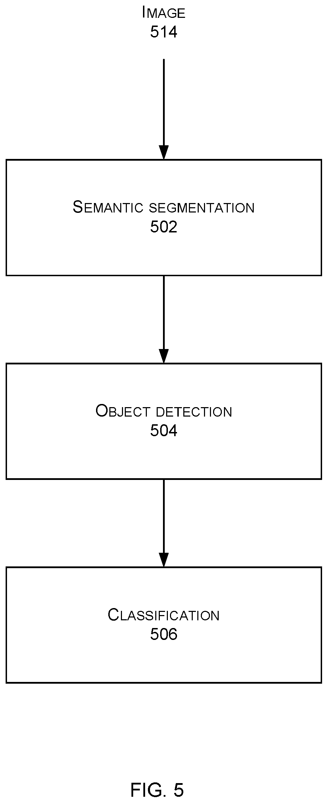

Anomalous image portions are portions of an image depicting an anomalous part of the environment such as a crack in a pipe, corrosion, vegetation or ice on equipment. In scenarios described herein, anomalous image portions from an image database are obtained using machine vision. By obtaining anomalous image portions from a first image database and a second image database, anomalies in an environment can be monitored over time. An example machine vision pipeline is depicted in FIG. 5 and explained in further detail below. FIG. 1 is a schematic diagram showing image processing of images from a first image database 102 from a first time and a second image database 104 from a second time.

In FIG. 1, anomalous portions of images from a first image database 102 are represented as circles such as 110. The anomalous image portions are obtained using machine vision as explained further below. They may be defined by a bounding box or as a plurality of pixels in the image associated with an anomalous part of the environment.

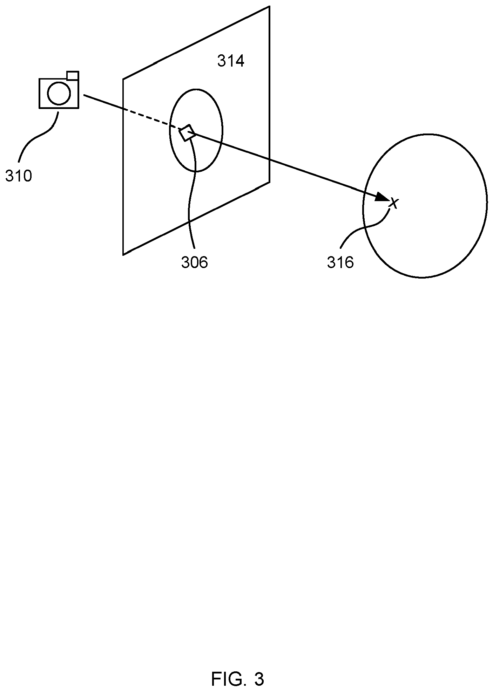

106 is a three-dimensional (3D) plot showing the 3D location of each of the anomalous image portions in the environment. A 3D location is determined for each anomalous image portion in the first image database 102 using a first point cloud and camera pose information, as explained in more detail with reference to FIG. 3 below. Each anomalous image portion may be classified into one of a plurality of classes and an embedding is computed for each image portion in some examples. Classes for example relate to the type of anomaly depicted by the image portion. A non-exhaustive list of examples of classes includes "crack", "corrosion" or "vegetation". An embedding of an anomalous image portion is a representation of the image portion which captures the visual features of the image portion. Based on 3D location, classification and embedding of each anomalous image portion 110 in the first image database 102, the anomalous image portions may be clustered into a first plurality of clusters. Clusters 122, 124 and 126 are shown in FIG. 1. Each cluster corresponds to an anomalous part of the environment which is depicted in one or more images. For example, cluster 122 corresponds to an anomalous part the environment which is depicted in three images from the first image database 102.

In the same manner as has been described with reference to the first image database, anomalous image portions 112 are obtained from a second image database 104 and are shown as squares in FIG. 1. In examples, a 3D location as well as a classification and embedding is computed for each image portion. In various examples, based on 3D location, classification and embedding of each anomalous image portion 112 in the second image database 104, the anomalous image portions 104 are clustered into a second plurality of clusters 128, 130, 132.

The first image database 102 is from a first time and the second image database 104 is from a second time which is different from the first time. For example, the second image database is captured, of the same environment as for the first image database, days, months or years after the first image database. It is determined whether the same anomalous part of the environment can be seen in the first image database and the second image database in order to compare the status of the environment at the first time and the second time. For example, cluster 122 corresponds to an anomalous part of the environment seen in the first image database 102 and cluster 128 corresponds to an anomalous part of the environment seen in the second image database 104. Various example methods described herein determine whether a first cluster such as 122 corresponds to a second cluster such as 128 in the sense that they both represent the same anomalous part of the environment. This is based on 3D location, classification and embedding of image portions in the first and second clusters. If the locations, classifications and image embeddings are similar enough then the clusters are considered to correspond to each other.

An example method for determining whether the clusters correspond to each other comprises the following. The classifications of each cluster are obtained and if the classifications are not the same it is determined that the clusters do not correspond to each other. If the classifications are the same then the method proceeds to the next step. Representative locations of the clusters are compared to each other. Representative location is for example the center of each cluster as determined by a geometric mean or another average location of points in the cluster. If the distance between the representative locations is larger than a predetermined distance then it is determined that the clusters do not correspond to each other. In some examples the predetermined distance may be 2 meters. If the distance between the representative locations is below the predetermined distance then the method proceeds to the next step. Similarity of image embeddings is determined using cosine similarity or any other suitable similarity metric such as L2 norm. In examples, a cosine similarity metric value is compared to a predetermined threshold. The cosine similarity metric value may be computed as the mean of the cosine similarities of all pairs of images between the two clusters. In other words, a cosine similarity is determined for each pair of image embeddings, one image embedding from each cluster. An average such as a mean is computed from the cosine similarities to determine a cosine similarity metric value to be compared to a predetermined threshold. If the cosine similarity metric value is above the predetermined threshold then the clusters are considered to correspond to each other. The predetermined threshold for a cosine similarity metric value is for example 0.5. L2 norm may also be used to determine similarity between image embeddings and in these scenarios the clusters are considered to correspond to each other whether an L2 metric value is below a predetermined threshold. This method for determining whether the clusters correspond to each other is provided by way of example and the skilled person understands that other suitable methods for determining whether the clusters correspond to each other may be used.

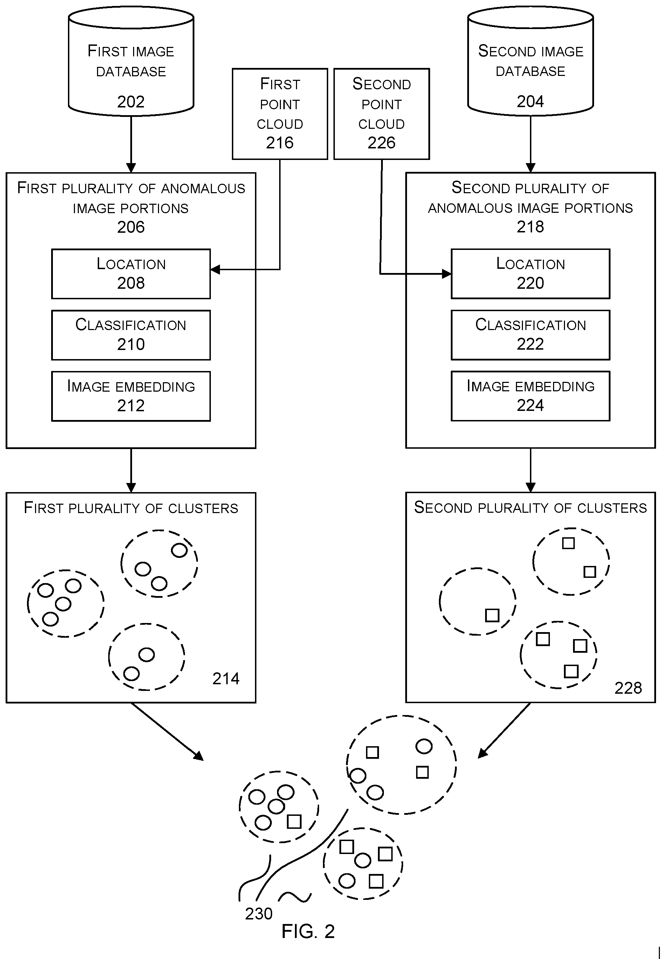

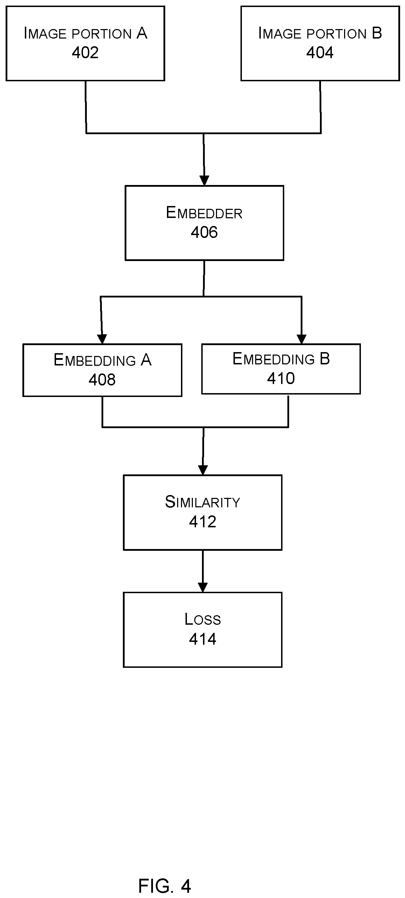

FIG. 2 is a schematic diagram showing image processing of images in a first image database 202 and in a second image database 204. In various examples image databases 102 and 104 correspond to image databases 202 and 204 respectively. The images in both databases depict the same environment but were captured by a camera at different times, a first time and a second time respectively. A first point cloud 216 is a point cloud depicting the environment at the first time and a second point cloud 226 is a point cloud depicting the environment at the second time. Machine vision is used to determine a first plurality of anomalous image portions 206 from first image database 202 and a second plurality of image portions 218 from second image database 204. An anomalous image portion is a portion of image which depicts an anomalous part of the environment, for example a portion of image showing a crack in a pipe or a patch of corrosion on the surface of a piece of equipment. Detecting and identifying anomalous image portions using machine vision is described in more detail with reference to FIG. 5.For each anomalous image portion, a 3D location 208, 220 is determined along with a classification 210, 222 and an image embedding 212, 224. In order to determine a 3D location 208, 220 for each anomalous image portion, a point cloud is used as explained in more detail with reference to FIG. 3 below. To determine a 3D location of an image portion in the first image database 202 the first point cloud 216 is used and to determine a 3D location of an image portion in the second image database 204 the second point cloud 226 is used as explained further with reference to FIG. 3 below. In some example scenarios the first point cloud and the second point cloud are the same point cloud, for example when there have not been significant changes to the environment between the first time and the second time. This may be the case for example if there are days or weeks between the first and second time rather than months or years. Where changes to the environment are significant, including structural changes such as the addition or removal or scaffolding, using different first and second point clouds results in more accurate 3D locations. Classification 210, 222 is a classification of each anomalous image portion into one of a plurality of classes. Classes for example relate to the type of anomaly depicted by the image portion. A non-exhaustive list of examples of classes includes "crack", "corrosion" or "vegetation". Classification is performed using any suitable image classification method, including using a machine learning classification model such as a convolutional neural network, a support vector machine, a random decision forest, a multi-layer perceptron or other classifier. An image embedding of an anomalous image portion is a representation of the image portion which captures the visual features of the image portion. Image embeddings 212, 224 are explained further with reference to FIG. 4 below.

The first plurality of image portions 206 is clustered into a first plurality of clusters 214 based on 3D location 208, classification 210 and image embedding 212. Similarly, the second plurality of image portions 218 is clustered into a second plurality of clusters 228 based on 3D location 220, classification 222 and image embedding 224. Each cluster in the first plurality of clusters 214 corresponds to an anomalous part of the environment which is in view in one or multiple image portions of the image portions 206. Each cluster in the second plurality of clusters 228 corresponds to an anomalous part of the environment which is in view in one or multiple image portions of the image portions 218.

An example method for clustering a first plurality of image portions 206 into a first plurality of clusters 214 comprises the following. The same method may be used to cluster a second plurality of image portions 218 into a second plurality of clusters 228. Classification 210 of each image anomalous image portion is accessed and if the classifications of two image portions are not the same then it is determined that those image portions are not in the same cluster. If the classifications are the same then the method proceeds to the next step. Location 208 is accessed for each anomalous image portion and if the distance between two image portions is larger than a predetermined distance then it is determined that those image portions are not in the same cluster. In some examples the predetermined distance may be about 2 meters. If the distance between the representative locations is below the predetermined distance then the method proceeds to the next step. Image embedding 212 is accessed for each image portion. Similarity of image embeddings is determined using cosine similarity or any other suitable similarity metric such as L2 norm. If cosine similarity between two image embeddings is above a predetermined threshold then the image portions are determined to be in the same cluster. Additionally or alternatively, if the L2 norm is below a predetermined threshold then the image portions are determined to be in the same cluster.

Another example method for clustering a first plurality of image portions 206 into a first plurality of clusters 214 comprises the following. The same method may be used to cluster a second plurality of image portions 218 into a second plurality of clusters 228. 3D location 208 is used to determine clusters via a nearest neighbor approach. Then, classification 210 and image embedding 212 are used to validate the clusters by determining whether the image portions in the clusters correspond to the same anomalous environment portion. Image portions remaining in the cluster have the same classification and have similar image embeddings as determined by cosine similarity, L2 norm and/or any other similarity metric. For example, if a cluster as determined by 3D location includes image portions with two different classifications such as "crack" and "vegetation" then the cluster will be split into two or more clusters. These methods for clustering image portions are provided by way of example and the skilled person understands that other suitable methods for clustering may be used.

Clustering of image portions such as described above may result in overlap between clusters. For example, the same anomalous image portion is included in two or more clusters. Therefore, in various example scenarios post-processing of the clusters combines all corresponding anomalies into the same cluster, resulting in non-overlapping clusters. The two or more clusters including the same anomalous image portion are combined into one cluster.

Once clusters have been obtained for the first and second image databases, it is then determined whether a first cluster from the first plurality of clusters 214 corresponds to the same anomalous part of the environment as a second cluster from the second plurality of clusters 228.This is based on 3D location, classification and embedding of the image portions in the first and second clusters. For example, at 230 in FIG. 2 it is shown that the clusters 214 correspond to the clusters 228. A pair of clusters is matched if the 3D location, classification or embedding of the image portions in the clusters are similar. Matching a pair of clusters, in other words determining whether a first cluster corresponds to a second cluster in the sense that they correspond to the same anomalous portion of the environment, is explained above with reference to FIG. 1,

FIG. 3 is a schematic diagram showing an example method for determination of three-dimensional location corresponding to an anomalous image portion. 3-D locations such as locations 208 and 220 may be determined using a method such as the method depicted in FIG. 3 which uses camera pose information as well as a point cloud such as point cloud 216, 226, and may also use camera intrinsic information and resolution. Camera pose refers to the location and orientation of the camera 310 at the time when an image is taken. In various scenarios described herein camera pose comprises three dimensional location information and three dimensional orientation information. In FIG. 3, an anomalous image portion 314 is depicted as a rectangular portion of an image from an image database. For each pixel in the anomalous image portion 314 such as pixel 306, a ray is computed from the camera 310 to the pixel 306 and projected into the three-dimensional environment depicted by the point cloud. The first point in the point cloud which is encountered by the ray is identified. In the example shown schematically in FIG. 3, the identified point is point 316. The 3D location of the identified point is considered as the 3D location for the pixel. In various examples, a 3D location of each pixel in an anomalous image portion 314 is obtained. So that the locations of anomalous image portions can be represented as a single location, or set of coordinates, an aggregation is computed such as an average 3D location, a mean or median x,y,z coordinates.

Image embeddings such as 214, 228 are obtained for each anomalous image portion as mentioned above with reference to FIG. 1 and FIG. 2. An image embedding is a numerical representation of the image portion which captures the semantic and visual features of the image portion. The image embedding is represented as a vector of numbers and is computed using a machine learning model such as a neural network.

FIG. 4 is a schematic diagram showing aspects of training a machine learning model used to compute an image embedding for each anomalous image portion in first and second pluralities of anomalous image portions 206 and 218. Embedder 406 is a model which generates embeddings. In various scenarios embedder 406 is a neural network such as a convolutional neural network, or multi-layer perceptron, or a commercially available model such as contrastive language-image pre-training CLIP. In some examples embedder 406 is DINOV2 which is trained in a self supervised manner. Image portions such as image portion A 402 and image portion B 404 are input into embedder 406. The output of embedder 406 is an embedding represented as a vector of numbers such as embedding A 408 or embedding B 410. Example embedder 406 depicted in FIG. 4 is trained by generating embeddings for pairs of images such as image portions A and B. Similarity 412 is computed from embedding A and embedding B and used to determine loss 414. In various examples, loss 414 is a cosine similarity loss or cosine embedding loss. Based on loss 414, the model parameters of embedder 406 are updated during training. During training, the embedder model 406 is provided with pairs of images of the same integrity issue from different angles, distances, or points in time. Also included in the training data are pairs of images of different integrity issues. Cosine similarity loss is found to give improved performance. This may be because cosine similarity loss may push embeddings of the same integrity issues towards each other, whereas embeddings of images of different integrity issues are pushed apart.

FIG. 5 is a schematic diagram of an example machine vision pipeline. A machine vision pipeline such as the one shown in FIG. 5 is used in various examples to obtain anomalous image portions. An anomalous image portion is a portion of image which depicts an anomalous part of the environment. The anomalous image portion may be defined by a bounding box such as a rectangle, square, circle or other suitable shape surrounding a detected anomalous part of the environment. The anomalous image portion may be defined as a plurality of pixels.

In various scenarios, anomalous image portions are detected by a semantic or instance segmentation model. The output of a semantic or instance segmentation model is a per pixel prediction of which pixels in the image are identified as corresponding to an anomalous portion of the environment. Objection detection models are also used to detect anomalous image portions and these models output a bounding box around the detected anomalous image portion. Object detection and semantic segmentation may be combined. For example, when a segmentation model is trained to detect equipment categories such as piping or structural steel, the object detection predictions can be filtered based on overlap with the semantic segmentation prediction. Domain expertise may also be included for example by including constraints that corrosion occurs only on piping or structural steel. Combining segmentation models with object detection models means that anomalous image portions are more accurately detected in an image database.

The machine vision pipeline shown in FIG. 5 includes object detection 504, semantic segmentation 502 and classification 506. An image 514 is input into the machine vision pipeline. Semantic segmentation 502 partitions the model into regions or segments. Each pixel in the image is categorized into a segment associated with a class or object. Semantic segmentation model 502 identifies pixels in image 514 which correspond to one or more anomalous portions of the environment, for example the segmentation model identifies corrosion or vegetation in the environment. Additionally or alternatively, semantic segmentation model 502 identifies pixels which correspond to areas in the environment where anomalous portions of the environment are likely to be found. For example, the segmentation model may detect equipment in the environment such as pipes or bolts. Semantic segmentation allows crops of the image to be taken which surround areas in the image which are likely to include anomalous portions of the environment. Examples of semantic segmentation model 502 include but are not limited to models such as, based on, or combinations of: VisionTransformer, Swin Transformer, UNet, Mask2Former, segment anything model SAM, multi-modal model such as visual program distillation VPD. or any other suitable model.

Object detection module 504 detects instances of semantic objects in the input image 514. Examples of objects which may be detected are pipes, insulation, storage units or other objects. Object detection is performed on either or both of the full input image 514 or crops of the input image 514 generated using the results of semantic segmentation 502. Examples of suitable object detection models include but are not limited to models such as, based on, or combinations of: YOLO, Detectron2, EffienientDet, FasterRCNN, Mask2Former, ConvNeXt, ConvNeXt V2, Co-DETR. In some examples the object detection model is fine tuned based on the environments which are being monitored to detect appropriate categories.

Classification model 506 classifies the part or parts of the image 514 which correspond to one or more anomalous portions of the environment with a label corresponding to a type of issue. For example, classification 506 may result in a part of the image being labeled as "vegetation", "ice", or "crack". In further examples, the classification model 606 also categorizes the severity of the issues for example into categories of high, medium and low severity. In still further examples, the classification model 606 categorizes installation of a piece of equipment such as a bolt (the bolt having been detected by object detection module 504) into categories such as "correctly installed", "incorrectly installed". In various examples, classification is performed on image crops generated using the results of semantic segmentation 502. Examples of suitable classification models include but are not limited to a multi-layer perceptron, EfficientNet ResNet50, ResNet101, DINOV2, models based on a Vision Transformer or the ConvNeXt-V2 backbone. Anomalous image portions are detected using machine vision such as described in reference to FIG. 5. A first plurality and second plurality of anomalous image portions are obtained. The anomalous image portions are processed as described for example with reference to FIG. 1 and FIG. 2 to determine whether the same anomalous part of the environment is depicted in a first image database and a second image database based on 3D location, embedding and classification of anomalous image portions in both databases.

Further image processing as described below may be performed in order to compare the anomalous part of the environment at the first time and the second time. In some examples, the severity of an anomaly such as a crack or corrosion may be compared based on classifications of anomalous image portions such as classifications 210, 222. Classifications such as 210, 222 may categorize a crack or corrosion at a first time as "mild" and as "severe" at a second time. In other examples, an anomaly such as a crack or corrosion is not present at the first time but is present at the second time and the presence of anomalies may be compared across time. Additionally or alternatively, various methods described herein allow an anomalous part of the environment to be compared at the first time and the second time using a point cloud to represent the anomalous part of the environment and to generate a mesh corresponding to the anomalous part of the environment.

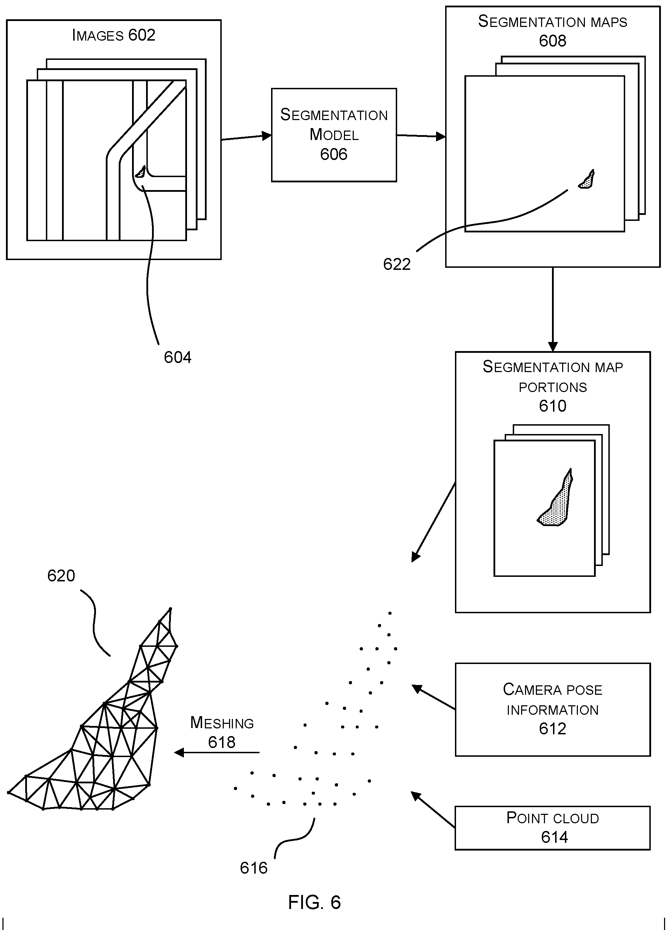

FIG. 6 is a schematic diagram showing generation of an anomalous point cloud 616 and surface mesh 620 representing an anomalous portion of the environment. The methods described with reference to FIG. 6 may be performed on the first image database from the first time or the second image database from the second time. Images 602 are one or more images or image portions from the database which depict a particular anomalous portion of the environment. For example, images 602 are images corresponding to a cluster of anomalous image portions in the database (such as clusters 122, 124, 126, 128, 130, 132 in FIG. 1). Images 602 may be one or more of the anomalous image portions in a cluster. In the example image 602 in FIG. 6 there is shown a pipe with crack 604. The crack in this example is an anomalous part of the environment. A segmentation model 606 is used to identify pixels in each image 602 corresponding to the anomalous part of the environment. For example segmentation model 606 classifies every pixel as "anomalous" or "not anomalous". Examples of segmentation model 606 include but are not limited to a Mask2Former head with a large Swin Transformer backbone, or a segment anything model SAM combined with object detection predictions, or any other suitable model. Output of segmentation model 606 is a segmentation map which may be referred to as a segmentation mask. One segmentation map 608 is produced for each image 602. A segmentation map is an image where the value of each pixel in the image is the classification according to segmentation model 606. In the example segmentation map 608 the crack in the pipe is shown at 622. Optionally, segmentation map portions 610 are generated by cropping the segmentation map in the region around the anomaly. In various examples a blob filter is applied to the segmentation maps or segmentations map portions in order to keep only a largest anomalous blob in the segmentation map. A segmentation model may identify multiple regions of anomalous pixels, with some regions of anomalous pixels being very small and/or corresponding to noise. Using a blob filter allows issues and anomalies to be isolated in the segmentation map and noise to be reduced.

Each segmentation map 608 or segmentation map portion 610 is two-dimensional and the map identifies the pixels in each image corresponding to the anomaly which in this example is a crack in a pipe. Camera pose information 612 and a point cloud depicting the environment 614 are used to determine the 3D locations of pixels in the segmentation maps or map portions and to identify points in the point cloud which correspond to the anomaly. Each segmentation map is projected to the point cloud 614 using ray casting. As described with reference to FIG. 3, for each anomalous pixel in a segmentation map (i.e. each pixel identified as depicting an anomaly such as the crack 604), a ray is computed form the camera location at the time the image was taken to the pixel. The ray is projected into the 3D environment and point cloud points near to the ray are identified as corresponding to the anomaly. In order to find point cloud points near to the ray, a nearest neighbor search is used in some scenarios for example using k-d tree or a heuristic method. While performing a nearest neighbor search a search radius may be used such that point cloud points which are further from the ray than the search radius are excluded from the search. In some scenarios, the physical size of each pixel is used as a search radius in the point cloud. In further example scenarios, a cut-off distance is used to exclude points of the point cloud which are too far away from the camera based on ground sampling requirements. Ground sampling distance is related to image resolution and is the distance between pixel centers measured on the ground. In an example, a ground sampling distance of about 3 mm is used as a cut-off distance. If the size of the pixel is larger than the tolerance due to a large distance, these points are not segmented in the point cloud for the image.

For each segmentation map, a plurality of point cloud points are identified as being associated with the anomaly and these points are referred to as a point cloud segmentation. A point cloud segmentation may be represented as a list of point cloud indices. If one point cloud segmentation is generated, it is used to obtain the first anomalous point cloud in the sense that the point cloud segmentation is the anomalous point cloud. Where more than one point cloud segmentations are computed, they are combined together to obtain an anomalous point cloud depicting the anomaly such as anomalous point cloud 616 in FIG. 6 which depicts crack 604. In various scenarios, the point cloud segmentations are combined together using a weighted voting strategy or other aggregation method. In some examples, weights are determined using distance from camera to point cloud point in each point cloud segmentation. For example, a point cloud point is associated with the anomaly (such as a crack) using a first segmentation map. The same point cloud point is not associated with the anomaly using a second segmentation map. The weighting gives more weight to the segmentation map which was generated using an image taken by a camera which is closer to the equipment. In the scenario where the first segmentation map corresponds to a camera which is closer to the equipment, the point cloud point will be determined to be associated with the anomaly.

In various examples, an anomalous point cloud such as 616, which is a combination of one or more point cloud segmentations, is used to generate a surface mesh 620 by meshing 618. Meshing 618 may comprise using a ball pivoting algorithm or Poisson surface reconstruction. From surface mesh 620, surface area of the anomaly may be estimated by finding the surface area of the surface mesh.

An anomalous point cloud and/or surface mesh in various examples is computed from the first image database or the second image database. In further examples, third and subsequent image databases and point clouds are accessed such that anomalous point clouds and/or surface meshes may be generated at third and later times. An example method for determining the change in an anomalous part of the environment over time is to compare surface area of a surface mesh overtime. Sometimes, a forecasting model is trained using historical surface area data to predict a future surface area value for an anomalous part of the environment. The forecasting model may be a machine learning model such as a neural network, a random forest or gradient based model. Future surface area values may be compared to a threshold in order to determine whether to fix or replace the anomalous part of the environment.

In various examples described herein, determining the change in an anomalous part of the environment over time comprises comparing a first point cloud to a second point cloud. The point clouds which are compared may be point clouds depicting the entire environment such as point clouds 216 and 226, point clouds depicting a portion of the environment, point clouds for the region around an anomaly in the environment, or anomalous point clouds for the anomaly such as point cloud 616. The point clouds to be compared with each other are resampled at the same resolution to allow for comparison. In some examples a difference point cloud is computed. The difference point cloud may be segmented using a segmentation model providing a classification for the change in the environment of portion thereof. A filter may be applied to the results to remove non-relevant differences such as bicycles, cars and humans.

In various examples of the invention described herein, images of an environment are processed in order to determine whether corrosion under insulation (CUI) is present in the environment. In various examples methods, it is determined whether CUI is present in an anomalous part of the environment at a first time and/or at a second time. As mentioned above, corrosion under insulation is the occurrence of corrosion which is hidden or obscured by insulating material surrounding a pipe or another piece of equipment. Corrosion under insulation is difficult to detect because of the insulating material, but causes damage to equipment. Therefore it is advantageous to find an effective method to detect corrosion under insulation.

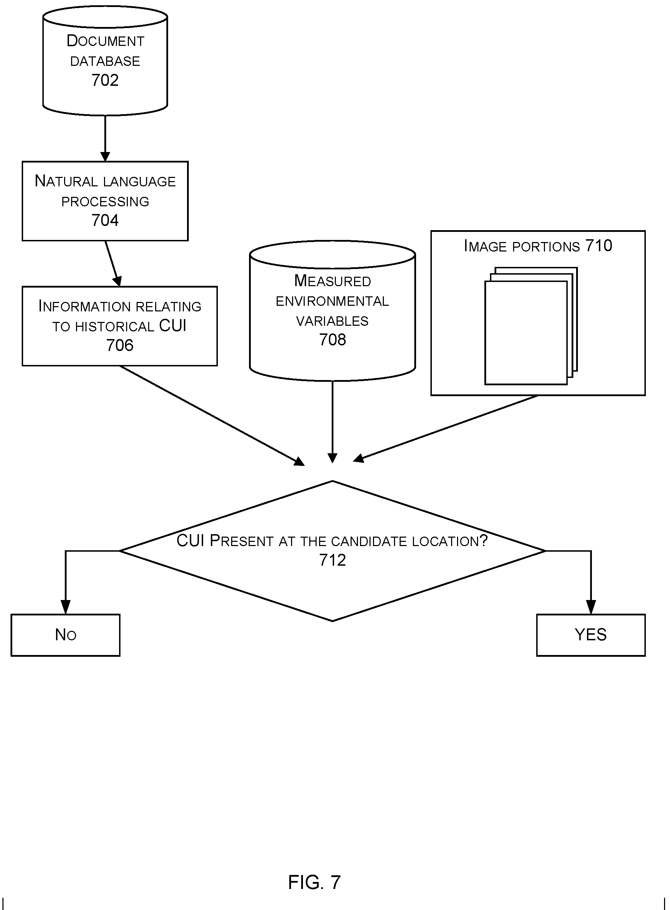

FIG. 7 is a schematic diagram showing an example method for detecting CUI at a candidate 3D location. Candidate 3D locations in various locations are determined from the 3D locations of anomalous image portions in an image database which may be the first or second image database described above and for example depicted in FIG. 1 and FIG. 2. Machine vision such as the machine vision shown in FIG. 5 may be used to identify anomalous image portions which are classified as potentially depicting corrosion under insulation. An image classification model such as classification model 506 may be trained to identify potential CUI areas, for example using supervised learning. Additionally or alternatively, image classifications such as classifications 210, 222 as shown in FIG. 2 may be used to identify potential CUI areas. Areas of the environment which are more likely to include CUI for example include damaged insulation, exposed matrix, insulation junctions, lifting lugs, stiffener rings, or brackets. These indications of CUI may be identified using machine vision. 3D locations for anomalous image portions may be determined using ray casting as described with reference to FIG. 3. In various examples the anomalous image portions are clustered using a clustering model to group anomalous image portions corresponding to the same part of the environment together. An average (or other aggregated) location for each cluster may be determined based on the 3D locations of the anomalous image portions. In scenarios, the average location is a candidate location for CUI. Candidate CUI locations may also be determined using other suitable methods.

In order to determine whether CUI is present at each candidate location 712 information relating to historical CUI 706, measured environmental variables 708 and image portions 710 are input into a CUI model such as a decision tree or other machine learning model. This allows the combination of image predictions with real time operation conditions and historical reports in order to more accurately detect CUI in an environment.. For a particular candidate location, image portions 710 may be the anomalous image portions in a cluster of image portions corresponding to a part of the environment. Optionally, image embeddings are computed from image portions 710 and the image embeddings are input into the CUI model.

Measured environmental variables 708 are stored in a database and used to determine whether CUI is present at a candidate location. Environmental variables include climate information and location of the environment as well as operating conditions. Examples of environmental variables include one or more of: temperature, humidity, pressure, moisture, condensation, coating condition, or any other suitable variable. Environmental variables are measured at various physical locations in the environment. Examples of sensors for measuring environmental variables include moisture sensors, pressure sensors, and temperature sensors. For a candidate CUI location, relevant environmental variable measurements are extracted from a database of environmental variables. Relevant measurements are determined based on physical distance between the candidate CUI location and proximity in time to the time at which the images were acquired. For example, relevant measurements are measurements obtained within a predetermined distance and time.

Information relating to historical CUI 706 at a candidate CUI location is extracted from a document database 702 optionally using natural language processing 704. Document database 702 includes for example text documents relating to the environment such as written reports or text descriptions attached to equipment condition history reports. [Natural language processing 704 may comprise using a large language model such as GPT4 (trademark), BERT or XLNET. Information relating to historical CUI at the candidate location may be extracted by providing one or prompts to a large language model. An example prompt is "please find any reference to corrosion under insulation in the document database on pipe number 2". In further scenarios, natural language models which are not large language models are used to extract information relating to historical CUI at the candidate location. For example, models based on support vector machines can be used to classify text descriptions. In other scenarios, any other suitable method for extracting information from a document is used to extract information relating to historical CUI.

In order to determine whether CUI is present at each candidate location 712 information relating to historical CUI 706, measured environmental variables 708 and image portions 710 are input into a CUI model. In various examples the CUI model is a decision tree based on heuristic rules. This is used to combine inputs relating to different indicators of CUI together.

In various scenarios, methods for determining whether CUI is present in an environment such as depicted in FIG. 7 are used in combination with other methods described herein for processing images of an environment. In various scenarios, it is determined whether CUI is present in the first image database, the second image database or both.

Disclosed herein are methods for processing images of an environment to determine whether corrosion under insulation CUI is present in a part of the environment. A method comprises accessing an image database of images of the environment, accessing a point cloud depicting the environment, accessing camera pose information for each image in the image database, and accessing a document database comprising documents related to the environment. The method further comprises using a machine vision model to identify one or more candidate image portions depicting CUI and computing a 3-dimensional candidate location in the environment for each of the candidate image portions using the point cloud and camera pose information. It is determined whether CUI is present at each of the candidate locations based on information associated with the candidate location. The information comprises one or more candidate image portions associated with the candidate location, measured environmental variables related to the candidate location, and information relating to historical CUI at the candidate location extracted from the document database using natural language processing.

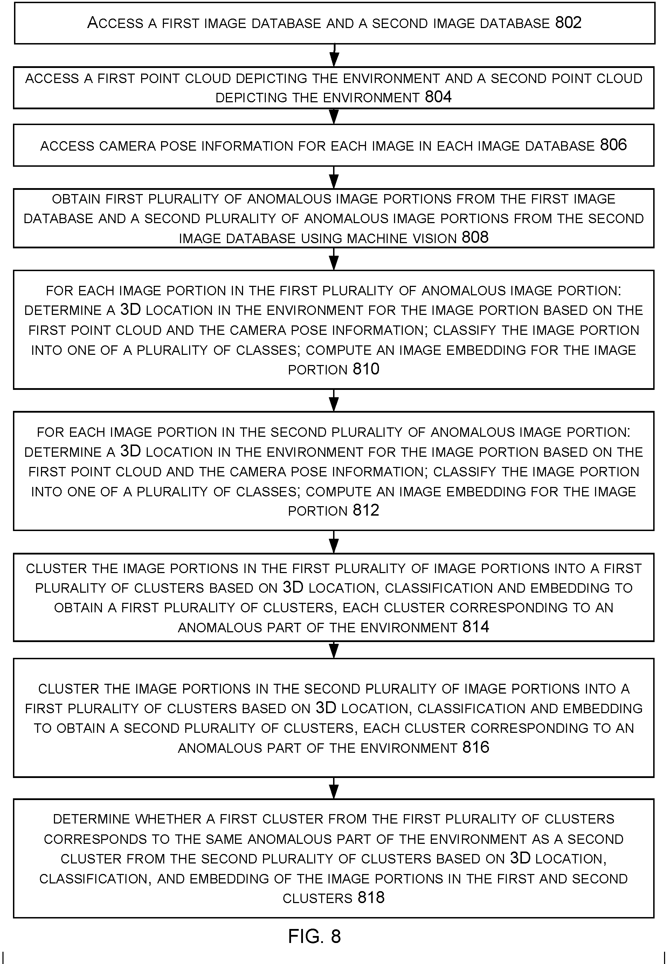

FIG. 8 is a flow diagram of a computer implemented method for processing images of an environment in a first image database and a second image database to identify images in each database depicting the same anomalous part of an environment. The first image database is from a first time and the second image database is from a second time which is different from the first time. At block 802, a first image database and a second image database are accessed. The databases comprise images of the same environment taken at different times (a first and second time). A first point cloud and a second point cloud depicting the environment are accessed (804). The first point cloud is from the first time and the second point cloud is from the second time. Each image in each database has associated camera pose information which is accessed at 806. At block 808, a first plurality of anomalous image portions from the first image database and a second plurality of anomalous image portions from the second image database are obtained using machine vision. For each image portion in the first plurality of anomalous image portion, a 3-dimensional location in the environment for the image portion is determined such as based on the first point cloud and the camera pose information 810. Also, the image portion is classified into one of a plurality of classes and an image embedding is computed 810. A location, classification and embedding is also determined for each image portion in the second plurality of image portions 812. Image portions in the first plurality of image portions are clustered at block 814 and image portions in the second plurality of image portions are clustered at block 816. The method comprises determining whether a first cluster from the first plurality of clusters corresponds to the same anomalous part of the environment as a second cluster from the second plurality of clusters based on 3D location, classification, and embedding of the image portions in the first and second clusters 818.

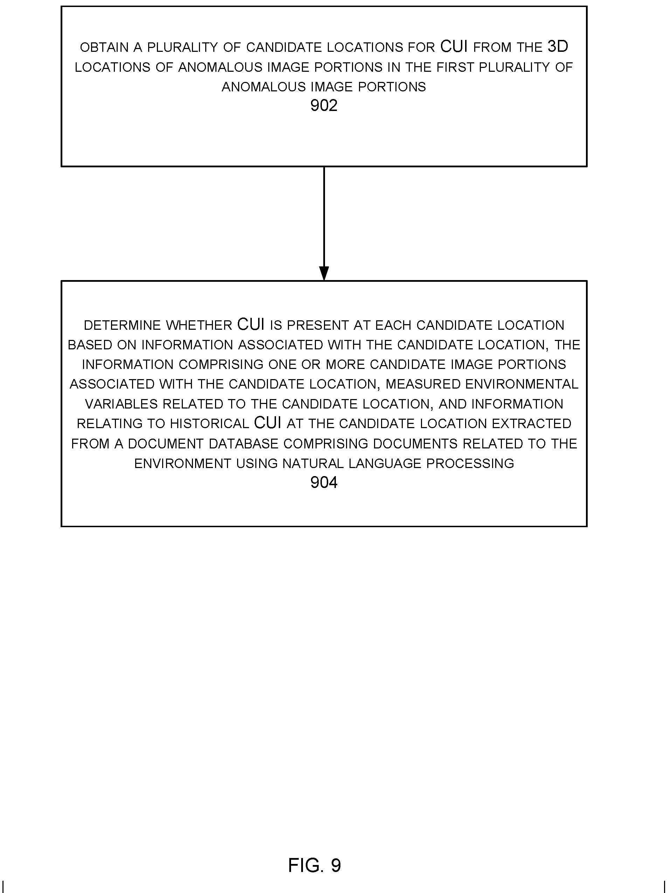

FIG. 9 is a flow diagram of a computer implemented method for determining whether corrosion under insulation (CUI) is present in an environment. At block 902, a plurality of candidate locations are determined for CUI from the 3D locations of anomalous image portions in the first plurality of anomalous image portions. At block 904, the method determines whether CUI is present at each candidate location based on information associated with the candidate location, the information comprising one or more candidate image portions associated with the candidate location, measured environmental variables related to the candidate location, and information relating to historical CUI at the candidate location extracted from a document database comprising documents related to the environment using natural language processing.

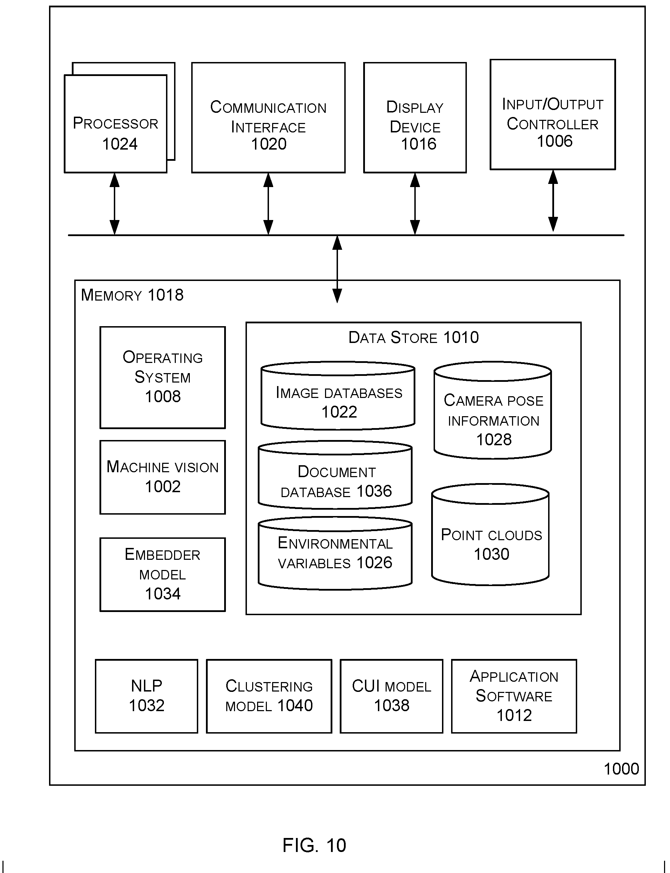

FIG. 10 illustrates an example computing-based device in which image processing methods are implemented. Computing-based device 1000 comprises one or more processors 1024 which are microprocessors, controllers, or any other suitable type of processors for processing computer executable instructions to control the operation of the device in order to process images depicting an environment. In some examples, for example where a system on a chip architecture is used, the processors 1024 include one or more fixed function blocks (also referred to as accelerators) which implement a part of the methods disclosed herein in hardware (rather than software or firmware). Platform software comprising an operating system 1008 or any other suitable platform software is provided at the computing-based device to enable application software 1012 to be executed on the device. A data store 1010 holds for example image databases 1022, camera pose information 1028, point clouds 1030. Optionally, the data store holds document database 1036 such a document database 702 and environmental variables 1026 such as measured environmental variables 708, or any type of data suitable for processing images depicting an environment. In various examples, combinations of one or more of natural language processing software 1004, machine vision software 1002, a clustering model 1040, a CUI model 1038 and an embedder model 1034 are also stored in memory 1018 to be used to process images depicting an environment.

The computer executable instructions are provided using any computer-readable media that are accessible by computing based device 1000. Computer readable media include, for example, computer storage media such as memory 1018 and communications media. Computer storage media, such as memory 1018, include volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 1018) is shown within the computing-based device 1000 it will be appreciated that the storage is, in some examples, distributed or located remotely and accessed via a network or other communication link (e.g. using communication interface 1020). The computing-based device 1000 also comprises an input/output controller 1006 arranged to output display information to a display device 1016 which may be separate from or integral to the computing-based device 1000. The input/output controller 1006 is also arranged to receive and process input from one or more devices, such as a user input device (e.g. a mouse, keyboard, camera, microphone or other sensor).

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method for processing images of an environment in a first image database (202) and a second image database (204), wherein the first image database (202) is from a first time and the second image database (204) is from a second time, to identify images in each database depicting the same anomalous part of an environment, the method comprising:
accessing the first image database (202) and the second image database (204);
accessing a first point cloud (216) depicting the environment from the first time and a second point cloud (226) depicting the environment from the second time;
accessing camera pose information for each image in each image database;
obtaining a first plurality of anomalous image portions from the first image database (202) and a second plurality of anomalous image portions from the second image database (204) using machine vision;
for each image portion in the first plurality of anomalous image portions,
determining a 3-dimensional 3D location in the environment for the image portion based on the first point cloud (216) and the camera pose information;
classifying the image portion into one of a plurality of classes;
computing an image embedding for the image portion;
for each image portion in the second plurality of anomalous image portions:
determining a 3D location in the environment for the image portion based on the second point cloud (226) and the camera pose information;
classifying the image portion into one of a plurality of classes;
computing an image embedding for the image portion;
clustering the image portions in the first plurality of image portions into a first plurality of clusters (214) based on 3D location, classification and embedding to obtain a first plurality of clusters (214), each cluster corresponding to an anomalous part of the environment;
clustering the image portions in the second plurality of image portions into a second plurality of clusters (228) based on 3D location, classification and embedding to obtain a second plurality of clusters (228), each cluster corresponding to an anomalous part of the environment; and
determining whether a first cluster from the first plurality of clusters (214) corresponds to the same anomalous part of the environment as a second cluster from the second plurality of clusters (228) based on 3D location, classification, and embedding of the image portions in the first and second clusters.

2. The method of claim 1, wherein the anomalous part of the environment is a first anomalous part of the environment, and wherein the method further comprises determining whether corrosion under insulation CUI is present in the first anomalous part of the environment or in another anomalous part of the environment at the first time by:
obtaining a plurality of candidate locations for CUI from the 3D locations of anomalous image portions in the first plurality of anomalous image portions; and
determining whether CUI is present at each candidate location based on information associated with the candidate location, the information comprising one or more candidate image portions associated with the candidate location, measured environmental variables related to the candidate location, and information relating to historical CUI at the candidate location extracted from a document database comprising documents related to the environment using natural language processing.

3. The method of claim 1 or claim 2, wherein the anomalous part of the environment is a first anomalous part of the environment, and wherein the method further comprises determining whether CUI is present in the first anomalous part of the environment or in another part of the environment at the second time by:
obtaining a plurality of candidate locations for CUI from the 3D locations of anomalous image portions in the second plurality of anomalous image portions; and
determining whether CUI is present at each candidate location based on information associated with the candidate location, the information comprising one or more candidate image portion associated with the candidate location, measured environmental variables related to the candidate location, and information relating to historical CUI at the candidate location extracted from a document database comprising documents related to the environment using natural language processing.

4. The method of any preceding claim further comprising representing the anomalous part of the environment at the first time as a first anomalous point cloud by:
using a segmentation model to generate a segmentation map from one or more images or image portions from the first image database which include the anomalous part of the environment;
generating a point cloud segmentation from each segmentation map using the first point cloud depicting the environment; and
if more than one point cloud segmentation is generated, combining the point cloud segmentations.

5. The method of any preceding claim further comprising representing the anomalous part of the environment at the second time as a second anomalous point cloud by:
using a segmentation model to generate a segmentation map from one or more images or image portions from the second image database which include the anomalous part of the environment;
generating a point cloud segmentation from each segmentation map using the second point cloud depicting the environment; and
if more than one point cloud segmentation is generated, combining the point cloud segmentations.

6. The method of claim 4 or claim 5 wherein combining point cloud segmentations comprises using a weighted voting strategy.

7. The method of claim 4 further comprising using the first anomalous point cloud to generate a first surface mesh for the anomalous part of the environment.

8. The method of claim 7 further comprising determining a first surface area from the first surface mesh.

9. The method of claim 5 further comprising using the second anomalous point cloud to generate a second surface mesh for the anomalous part of the environment.

10. The method of claim 9 further comprising determining a second surface area from the second surface mesh.

11. The method of claim 8 and claim 10 further comprising using the first surface area and second surface area to predict a third surface area at a third time.

12. The method of any preceding claim further comprising using a machine learning model to compute the image embeddings.

13. The method of claim 12 wherein the machine learning model is trained using cosine similarity loss.

14. An apparatus comprising:
a processor;
a memory storing instructions that, when executed by the processor, perform any of the methods of claims 1 to 13.

15. A computer storage medium having computer-executable instructions that, when executed by a computing system, direct the computing system to perform any of the methods of claims 1 to 13.
